# EUROPÄISCHE PATENTSCHRIFT

(11) **EP 2 604 876 B1**
(45) Veröffentlichungstag und Bekanntmachung des Hinweises auf die Patenterteilung: **25.09.2019**
(21) Anmeldenummer: 11192976.6
(22) Anmeldetag: 12.12.2011
(51) Int. Cl.: F16C 32/04

(54) **Magnetisches Radiallager mit Einzelblechen in tangentialer Richtung**
Magnetic radial bearing with individual core plates in tangential direction
Palier radial magnétique doté de tôles de noyau uniques en direction tangentielle

(43) Veröffentlichungstag der Anmeldung: 19.06.2013
(73) Patentinhaber: Siemens Aktiengesellschaft, 80333 München (DE)
(72) Erfinder: Bott, Erich, 97618 Hollstadt (DE); Vollmer, Rolf, 36129 Gersfeld (DE)

(56) Entgegenhaltungen:
- US-A- 4 473 259
- US-A- 4 983 870

## Beschreibung

Die vorliegende Erfindung betrifft ein magnetisches Radiallager zur drehbaren Lagerung eines Rotors mit einem Stator, der mehrere Spulenanordnungen aufweist, wobei die Spulenanordnungen in einer Umfangsrichtung um eine Achse des Radiallagers angeordnet sind, jede der Spulenanordnungen jeweils ein Blechpaket mit Einzelblechen aufweist, und jede der Spulenanordnungen jeweils eine Spule aufweist, die um das korrespondierende Blechpaket gewickelt ist.

Bei einem herkömmlichen magnetischen Radiallager weist der Stator Spulen auf, die radial nach innen zu der zu lagernden Welle gerichtet sind. D.h. die Spulenachsen verlaufen im Wesentlichen radial.

Aus dem Buch "magnetic bearings" von Gerhard Schweitzer und Eric H. Maslen, Springer Verlag Berlin, 2009, XV, Seiten 82 bis 84 und 96 sind auch radiale Magnetlager mit axialen Spulen bekannt. Dies bedeutet, dass sich die Spulenachsen parallel zur Lagerachse erstrecken. Dementsprechend erfolgt die Flussführung sowohl in den Spulen als auch im Rotor im Wesentlichen in axialer Richtung.

Aus der US 4 983 870 A ist ein magnetisches Radiallager bekannt. Dabei umgibt ein Statorgehäuse den Abschnitt eines Rotors mit einem Magnetfluss führenden Element, das sich um den Rotor herum innerhalb des Statorgehäuses erstreckt. Eine Vielzahl von Elektromagneten wird von dem Stator um den Umfang des Rotors entgegengesetzt zum magnetflussführenden Element gehalten. Jeder der Elektromagneten umfasst eine gestapelte Anordnung von Lamellen mit einer E-förmigen Querschnittskonfiguration. Jedes Blech enthält eine Polspitze in unmittelbarer Nähe zur Oberfläche des den Magnetfluss tragenden Elements, um einen Luftspalt zu bilden. Magnetisierungsspulen erstrecken sich um die Beine der E-förmigen Lamellen. Wenn den Spulen elektrischer Strom zugeführt wird, werden Magnetkräfte auf das magnetflussführende Element ausgeübt, wodurch der Rotor in einem schwebenden Zustand innerhalb des Statorgehäuses positioniert werden kann.

Die US 4 473 259 A betrifft ein Magnetlager zum Aufhängen eines linearen Ankerteils in einem länglichen zylindrischen Gehäuse mit zwei Sätzen von U-förmigen stationären Elektromagneten und Positionssensoren, die sich an jedem Ende des Gehäuses befinden. Jeder Elektromagnetsatz besteht vorzugsweise aus vier Elektromagnetanordnungen, die um 90° um den Umfang des Gehäuses herum angeordnet sind und zur Erzeugung von vier orthogonalen Magnetfeldern innerhalb des Gehäuses betreibbar sind. Jeder Satz von Positionssensoren ist mit den Elektromagneten ausgerichtet, um zwei orthogonale horizontale und vertikale Achsen zu definieren, von denen aus Signale bereitgestellt werden, die proportional zur orthogonalen Wellenverlagerung sind.

Magnetische Radiallager müssen hochdynamisch Störgrößen ausregeln können. Dabei soll die Kraft dem Strom mit möglichst geringer Verzögerung folgen.

Die Aufgabe der vorliegenden Erfindung besteht somit darin, die Dynamik eines magnetischen Radiallagers zu verbessern.

Erfindungsgemäß wird diese Aufgabe gelöst durch ein magnetisches Radiallager mit dem im Anspruch 1 angegebenen Merkmalen.
In vorteilhafter Weise besitzt also das magnetische Radiallager Spulen in Axialrichtung auf Blechpaketen, deren Einzelbleche in tangentialer Richtung gestapelt sind. Damit wird im magnetischen Kreis die Wirbelstromdichte gering gehalten. Hierdurch kann die Kraft dem Strom sehr rasch folgen, wodurch ein sehr dynamisches Verhalten des Radiallagers erreicht werden kann. Dabei hat die Blechung natürlich auch die Aufgabe, das magnetische Feld zu führen und aufgrund der Positionierung in radialer Richtung am Umfang verteilt die Tragkräfte aufzunehmen.

Vorzugsweise besitzt das magnetische Radiallager vier paarweise gegenüberstehende Spulenanordnungen. Hierdurch lässt sich eine ausreichende Lagerung bei einfachem Aufbau erzielen.

Darüber hinaus ist es von Vorteil, wenn jedes Blechpaket in einer axial verlaufenden Schnittebene einen U-förmigen Querschnitt aufweist, der zwei Schenkel und einen die Schenkel verbindenden Abschnitt aufweist. Dabei ist die jeweilige Spule um einen Teil des Blechpakets in einer Richtung senkrecht zu der Achse des Radiallagers gewickelt, und das Teil des Blechpakets ist dem verbindenden Abschnitt des Querschnitts zugeordnet. Damit kann über eine etwaige zu lagernde Welle ein nahezu geschlossener Magnetkreis realisiert werden.

Jedes Blechpaket ist in der Umfangsrichtung bogenförmig und besitzt in Umfangsrichtung eine Kontur, die einen konstanten Abstand zu einer zu lagernden, vorgegebenen Welle besitzt. Die Spulenanordnung insgesamt besitzt dann in etwa eine nierenförmige Gestalt.

Darüber hinaus kann jede Spulenanordnung einen Spulenträger bzw. -körper aufweisen, der um das jeweilige Blechpaket angeordnet ist. Ein derartiger Spulenträger verleiht der jeweiligen Spule den gewünschten Halt. Der Spulenträger kann teilbar sein. Insbesondere sollte er aus mindestens zwei Teilen bestehen, die leicht auf ein vorgefertigtes Blechpaket aufgesteckt werden können. So empfiehlt sich beispielsweise eine Zweiteilung dergestalt, dass sich ein radial äußeres Spulenträgerteil und ein radial inneres Spulenträgerteil gegenüberstehen.

In einer speziellen Ausführungsform kann der Spulenträger auch an das jeweilige Blechpaket gespritzt sein. Auch so kann der Spulenträger ohne hohen Fertigungsaufwand an das Blechpaket montiert werden.

In einer weiteren Ausführungsform weist das magnetische Radiallager ein ringförmiges Gehäuse auf, in dem die Spulenanordnungen befestigt sind. Durch dieses ringförmige Gehäuse lassen sich nicht nur die Spulenanordnungen befestigen, sondern es kann damit auch ein Schutz gegen Umgebungseinflüsse gewährleistet werden.

Das Gehäuse ist zweiteilig, wobei die beiden Gehäuseteile ebenfalls ringförmig sind. Das Gehäuse lässt sich somit in axialer Richtung zusammenfügen, wobei zwischen den beiden Gehäusehälften die Spulenanordnungen gehalten werden.

Am Innenumfang des ringförmigen Gehäuses ist ein separater Stützring zum radialen Stützen der Spulenanordnungen angebracht. Dieser Stützring kann nicht nur Stützaufgaben, sondern bei geeigneter Materialwahl auch Isolieraufgaben übernehmen.

Die vorliegende Erfindung wird nun anhand der beigefügten Zeichnungen näher erläutert, in denen zeigen:
- FIG 1: den prinzipiellen Aufbau eines erfindungsgemäßen magnetischen Radiallagers in einem Querschnitt entlang der Achse des Radiallagers;
- FIG 2: einen Querschnitt durch die Aktivteile des magnetischen Radiallagers von FIG 1 quer zur Achse;
- FIG 3: eine perspektivische Ansicht eines Blechpakets;
- FIG 4: das Blechpaket von FIG 3 mit Spulenträger;
- FIG 5: das Blechpaket von FIG 4 mit einer auf den Spulenträger gewickelten Spule, wodurch sich eine Spulenanordnung ergibt;
- FIG 6: die Spulenanordnung von FIG 5 eingesetzt in eine Gehäusehälfte;
- FIG 7: die Gehäusehälfte von FIG 6 besetzt mit weiteren Spulenanordnungen und einem Stützring; und
- FIG 8: das mit der zweiten Gehäusehälfte komplettierte magnetische Radiallager.

Die nachfolgend näher geschilderten Ausführungsbeispiele stellen bevorzugte Ausführungsformen der vorliegenden Erfindung dar.

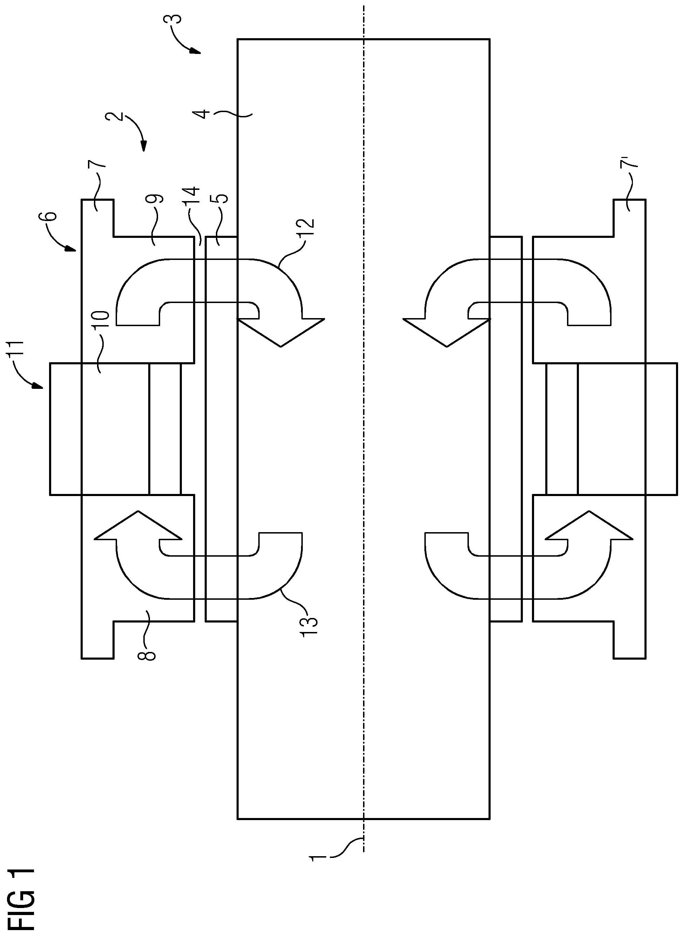

In FIG 1 sind die Aktivteile eines erfindungsgemäßen magnetischen Radiallagers im Längsschnitt, d.h. in einem Schnitt entlang der Achse 1 des Radiallagers dargestellt. Das Radiallager weist einen Stator 2 auf, der zur drehbaren Lagerung eines Rotors 3 dient. Der Rotor 3 besitzt eine Welle 4, die im Bereich des Stators von einem Rotorblech 5 umgeben ist. Das Rotorblech 5 hat die Aufgabe, Wirbelstromverluste möglichst gering zu halten, wenn das Magnetfeld aufgrund geringer Polzahl tief in den Rotor eindringt. Mit einer geringen Polzahl wiederum kann eine geringe Ummagnetisierungsfrequenz erreicht werden.

Der Stator weist am Umfang verteilt mehrere Spulenanordnungen 6 auf, von denen jede ein Blechpaket 7 besitzt. Jedes Blechpaket 6 besitzt Einzelbleche, die bezogen auf die Mitte des Blechpakets in tangentialer Richtung des Radiallagers gestapelt sind. Der Querschnitt jedes Blechpakets 6 entlang der Achse 1 des Radiallagers besitzt im Wesentlichen eine U-Form. Diese U-Form repräsentiert zwei Schenkel 8, 9 und einen die beiden Schenkel verbindenden Abschnitt 10. Auf diesen verbindenden Abschnitt 10 bzw. den korrespondierenden Blechpaketabschnitt ist eine Axialfeldspule 11 gewickelt. Die Achse der Axialfeldspule 11 verläuft parallel zu der Achse 1 des Radiallagers.

Bei einer Grunderregung der Spulenanordnungen 6 ergibt sich in dem Radiallager beispielsweise der in FIG 1 durch Pfeile 12, 13 eingezeichnete Magnetfluss. Demnach verläuft der magnetische Fluss entsprechend dem Pfeil 12 zunächst aus der Axialfeldspule 11 durch den Schenkel 9 des Blechpakets 7. Von dort fließt er weiter durch den radialen Luftspalt 14 zwischen Stator 2 und Rotor 3. Anschließend fließt er durch das Rotorblech 5 und die Welle 1 und von dort entsprechend dem Pfeil 13 in analoger Weise zurück in die Axialfeldspule 11. Der Magnetfluss verläuft also in der Axialfeldspule 11 zunächst in axialer Richtung, wird im Blechpaket 7 umgelenkt, sodass er in radialer Richtung durch den Schenkel 9, den Luftspalt 14 und das Rotorblech 5 im Wesentlichen radial nach innen verläuft. Im Rotor 3 wird der Magnetfluss wieder in axialer Richtung umgelenkt, verläuft unter der Spule 11 hindurch, wird wieder in radialer Richtung umgelenkt, sodass er den Rotor 3 zum Stator 2 verlässt. In dem Schenkel 8 des Blechpakets 7 wird der Magnetfluss wieder in axialer Richtung umgelenkt. Ein ähnlicher Magnetfluss ergibt sich auch für alle anderen Spulenanordnungen 6.

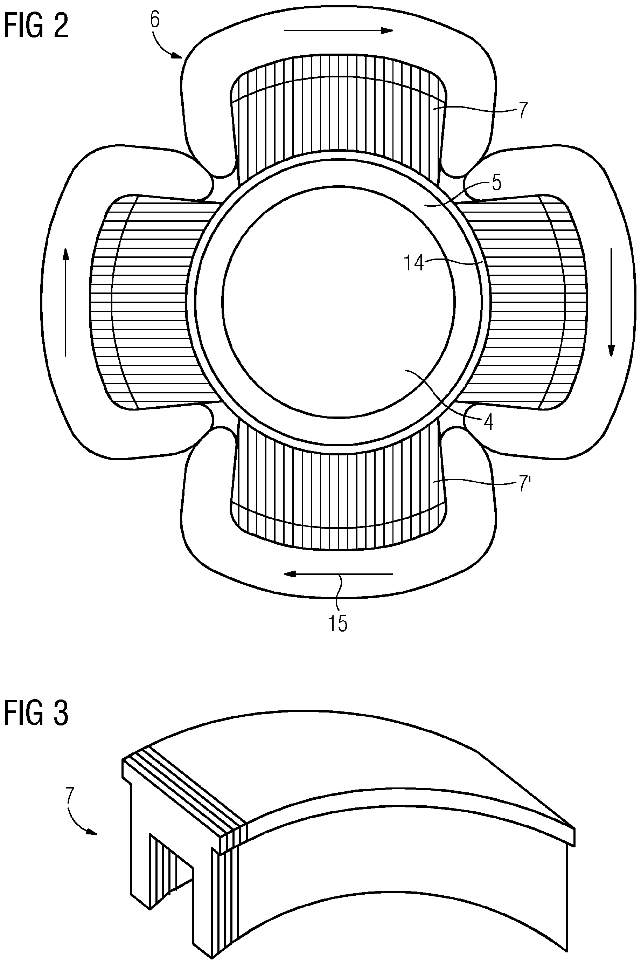

In FIG 2 sind die Aktivteile von FIG 1 im Querschnitt senkrecht zu der Achse 1 des Radiallagers dargestellt. Insbesondere sind dort die Blechpakete 7, 7' zu erkennen, bei denen die Einzelbleche in tangentialer Richtung bzw. in Umfangsrichtung gestapelt sind.

Im vorliegenden Beispiel sind vier Spulenanordnungen, die jeweils ein Blechpaket 7 und eine Axialfeldspule 11 aufweisen, am Umfang gleich verteilt angeordnet. D.h. es stehen sich immer zwei der vier Spulenanordnungen bezogen auf die Achse 1 paarweise gegenüber.

In FIG 2 ist auch die Stromrichtung 15 für die Grunderregung in jeder Axialfeldspule 11 eingezeichnet. Diese Stromrichtung führt zu dem Magnetfluss von FIG 1.

FIG 3 zeigt ein Blechpaket 7 in perspektivischer Ansicht. Das Blechpaket 7 besitzt, wie erwähnt, in axialer Richtung den U-förmigen Querschnitt. In Umfangsrichtung ist das Blechpaket 7 gebogen. Der Konturverlauf des dem Rotor zugewandten Abschnitts des Blechpakets entspricht einem Kreisbogenabschnitt. Ein Blechpaket 7 überdeckt somit in etwa einen 90°-Kreissektor des Rotors 3 im vorliegenden Beispiel. Die in Umfangsrichtung bzw. in tangentialer Richtung gestapelten Einzelbleche des Blechpakets 7 sind in FIG 3 ebenfalls zu erkennen.

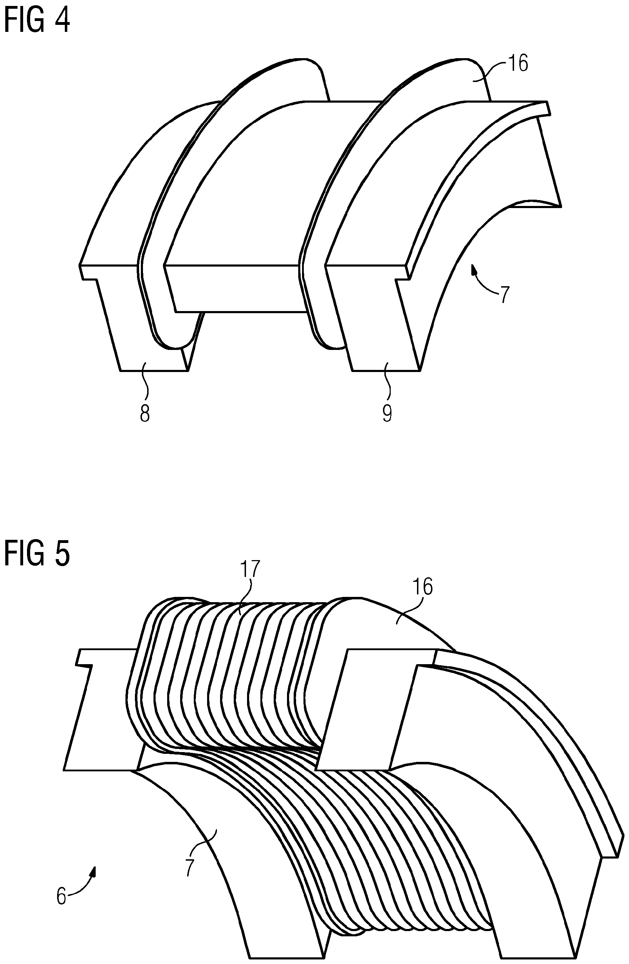

In FIG 4 ist das Blechpaket 7 von FIG 3 mit einem Spulenträger 16, der auch als Spulenkörper bezeichnet wird, versehen. Der Spulenträger 16 besteht vorzugsweise aus einem Kunststoff. Er kann zweigeteilt sein, so dass er sich leicht auf das Blechpaket 7 aufbringen lässt. Beispielsweise besteht der Spulenträger 16 aus zwei Hälften: einer radial außenliegenden Hälfte und einer radial innenliegenden Hälfte. Diese lassen sich dann über den Abschnitt 10 des Blechpakets stecken. Alternativ kann der Spulenträger 16 auch auf das Blechpaket 7 aufgespritzt sein.

FIG 5 zeigt eine komplette Spulenanordnung 6 in perspektivischer Ansicht. Auf den Spulenträger 16 ist eine Spule 17 aufgewickelt. Die Achse der Spule 17 verläuft parallel zu der Achse 1 des Radiallagers.

Der magnetische Pfad kann erfindungsgemäß also wirbelstromarm aufgebaut werden. Die vier magnetischen Pfade im Stator sind nämlich geblecht.

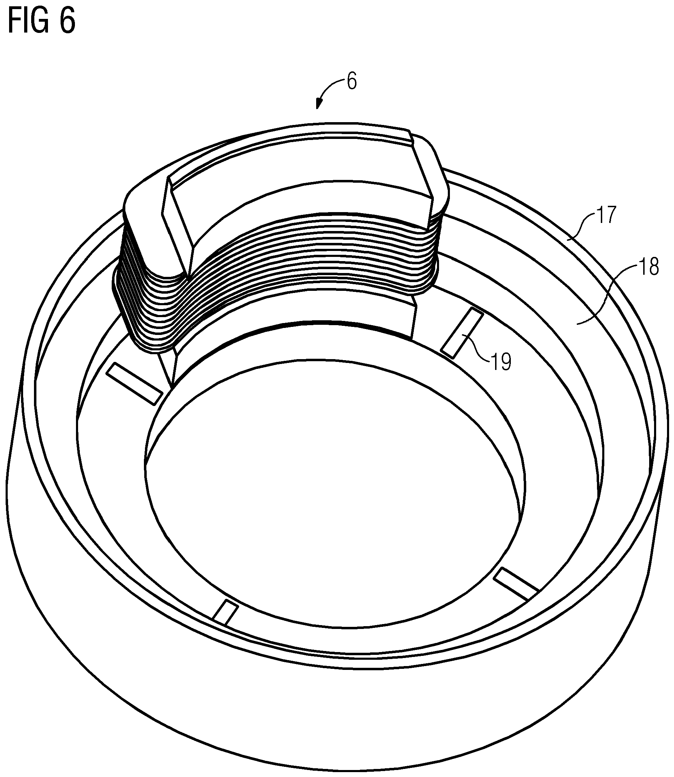

Wie in FIG 5 dargestellt ist, ist die Form der Spulenanordnung vorzugsweise nierenförmig. Damit lässt sich ein besonders kompaktes Lager realisieren, was die nachfolgenden Figuren 6 bis 8 zeigen.

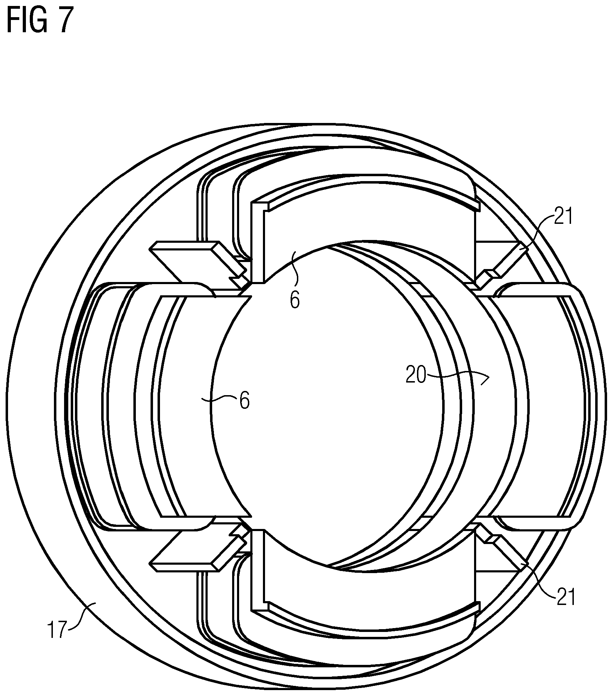

FIG 6 zeigt einen ersten ringförmigen Gehäuseteil 17, in dem die Spulenanordnung 6 von FIG 5 eingesetzt ist. Eine Schulter 18 in dem ersten Gehäuseteil 17 hält die Spulenanordnung 6 gegen eine radiale Bewegung nach außen. Darüber hinaus sind neben der Spulenanordnung 6 in dem ersten Gehäuseteil 17 Nuten 19 zu erkennen, die zum Fixieren eines in FIG 7 wiedergegebenen Stützrings 20 dienen. Die Nuten 19 verlaufen in radialer Richtung und enden vor dem Innenradius des ersten Gehäuseteils 17.

In FIG 7 ist das erste Gehäuseteil 17 mit vier Spulenanordnungen 6 am Umfang verteilt dargestellt. Außerdem ist der Stützring 20 eingezeichnet, der innen an allen Spulenanordnungen 6 anliegt und diese somit radial nach innen abstützt. Der Stützring 20 besitzt außerdem radial abstehende Flügel 21, die den Stützring 20 durch Formschluss gegenüber dem Gehäuse in Position halten. Außerdem werden die einzelnen Spulenanordnungen durch die Flügel 20 gegeneinander isoliert, denn es befindet sich jeweils ein Flügel 21 zwischen zwei Spulenanordnungen 6.

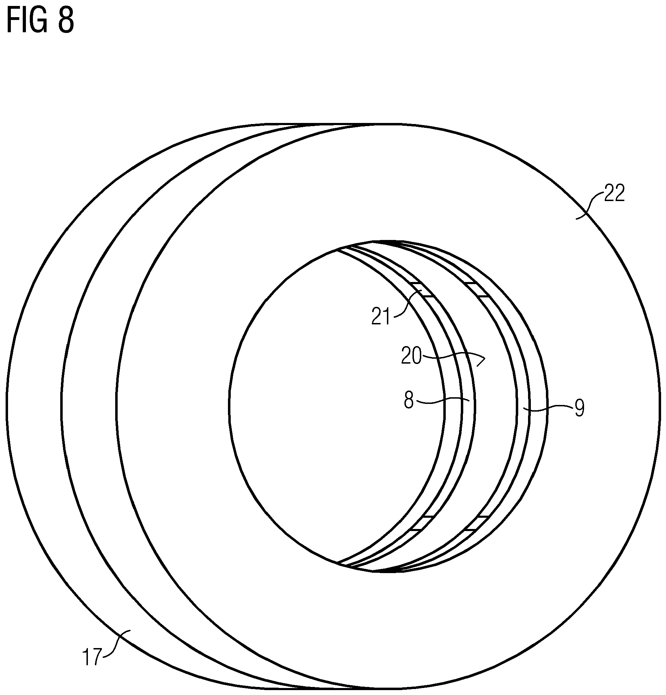

In FIG 8 ist das magnetische Radiallager ohne Rotor komplett dargestellt. Ein zweites Gehäuseteil 22, das identisch mit dem ersten Gehäuseteil 17 ausgeführt sein kann, ist auf das erste Gehäuseteil 17 aufgebracht, wodurch die Spulenanordnungen 6 nun komplett verdeckt werden. Im Inneren des ringförmigen Gehäuses, das aus den beiden Gehäusehälften 17 und 22 zusammengefügt ist, ist der Stützring 20 mit seinen Flügeln 21 zu erkennen. An beiden Seiten des Stützrings sind bündig die beiden Schenkel 8 und 9 der jeweiligen Blechpakete angeordnet.

Der erfindungsgemäße Aufbau des Magnetlagers mit dem nierenförmigen Spulen auf Spulenkörpern ermöglicht eine besonders kompakte Bauweise. Durch die Blechung der weichmagnetischen Segmente ist eine hohe Regelungsgüte erreichbar. Alle Bauteile sind vorzugsweise so geformt, dass sie durch einfaches axiales Fügen fixiert werden können. Damit ist eine kostengünstige Montage gewährleistet.

## Patentansprüche

1. Magnetisches Radiallager zur drehbaren Lagerung eines Rotors (3) mit
- einem Stator (2), der mehrere Spulenanordnungen (6) aufweist, wobei
- die Spulenanordnungen (6) in einer Umfangsrichtung um eine Achse (1) des Radiallagers angeordnet sind,
- jede der Spulenanordnungen (6) jeweils ein Blechpaket (7) mit Einzelblechen aufweist, und
- jede der Spulenanordnungen (6) jeweils eine Spule (11) aufweist, die um das korrespondierende Blechpaket gewickelt ist,
- wobei die Einzelbleche bei jedem Blechpaket (7) in der Umfangsrichtung gestapelt sind,
- wobei jedes Blechpaket (7) in der Umfangsrichtung bogenförmig ist und in Umfangsrichtung eine Kontur aufweist, die einen konstanten Abstand zu einer zu lagernden, vorgegebenen Welle (4) besitzt,
- wobei die Spulenanordnungen (6) insgesamt in etwa jeweils eine nierenförmige Gestalt aufweisen.
- wobei das magnetische Radiallager ein ringförmiges Gehäuse (17,22) aufweist, in dem die Spulenanordnungen (6) befestigt sind,
- wobei das Gehäuse (17,22) zweiteilig ist, und die beiden Gehäuseteile jeweils ringförmig sind und
- wobei am Innenumfang des ringförmigen Gehäuses (17,22) ein separater Stützring (20) zum radialen Stützen der Spulenanordnungen (6) angebracht ist.

2. Magnetisches Radiallager nach Anspruch 1, wobei das magnetische Radiallager vier paarweise gegenüberstehende Spulenanordnungen (6) aufweist.

3. Magnetisches Radiallager nach Anspruch 1 oder 2, wobei jedes Blechpaket (7) in einer axial verlaufenden Schnittebene einen U-förmigen Querschnitt aufweist, der zwei Schenkel (8, 9) und einen die Schenkel verbindenden Abschnitt (10) besitzt, wobei die jeweilige Spule (11) um einen Teil des Blechpakets in einer Richtung senkrecht zu der Achse (1) des Radiallagers gewickelt ist, welcher Teil dem verbindenden Abschnitt (10) zugeordnet ist.

4. Magnetisches Radiallager nach einem der vorhergehenden Ansprüche, wobei die Spulen (11) jeweils als Axialfeldspulen ausgebildet sind.

5. Magnetisches Radiallager nach einem der vorhergehenden Ansprüche, wobei jede Spulenanordnung (6) einen Spulenträger (16) aufweist, der um das jeweilige Blechpaket (7) angeordnet ist.

6. Magnetisches Radiallager nach Anspruch 5, wobei der Spulenträger (16) teilbar ist.

7. Magnetisches Radiallager nach Anspruch 5, wobei der Spulenträger (16) an das jeweilige Blechpaket (7) gespritzt ist.

## Claims

1. Magnetic radial bearing for the rotatable mounting of a rotor (3) having
- a stator (2) comprising several coil assemblies (6), wherein
- the coil assemblies (6) are arranged around an axis (1) of the radial bearing in a circumferential direction,
- each of the coil assemblies (6) comprises a laminated core (7) with single sheets and
- each of the coil assemblies (6) comprises a coil (11) that is wound the around the corresponding laminated core,
- wherein the single sheets in every laminated core (7) are stacked in the circumferential direction,
- wherein each laminated core (7) is arched in the circumferential direction and, in the circumferential direction, has a contour which is at a constant distance to a prespecified shaft (4) to be mounted,
- wherein the coil assemblies (6) overall have an approximately kidney-shaped form in each case,
- wherein the magnetic radial bearing has an annular housing (17, 22) in which the coil assemblies (6) are secured,
- wherein the housing (17, 22) is in two parts and each of the two parts of the housing has an annular shape and
- wherein a separate supporting ring (20) for radially supporting the coil assemblies (6) is attached to the inner circumference of the annular housing (17,22).

2. Magnetic radial bearing according to claim 1, wherein the magnetic radial bearing comprises four coil assemblies (6) facing each other in pairs.

3. Magnetic radial bearing according to claim 1 or 2, wherein each laminated core (7) comprises a U-shaped cross section in an axially extending cutting plane having two sides (8, 9) and a section (10) connecting the sides, wherein the respective coil (11) is wound around a part of the laminated core in a direction perpendicular to the axis (1) of the radial bearing, said part being assigned to the connecting section (10).

4. Magnetic radial bearing according to one of the preceding claims, wherein the coils (11) are each embodied as an axial field coil.

5. Magnetic radial bearing according to one of the preceding claims, wherein each coil assembly (6) comprises a coil carrier (16) arranged around the respective laminated core (7) .

6. Magnetic radial bearing according to claim 5, wherein the coil carrier (16) is separable.

7. Magnetic radial bearing according to claim 5, wherein the coil carrier (16) is sprayed onto the respective laminated core (7).

## Revendications

1. Palier radial magnétique de montage tournant d'un rotor (3), comprenant
- un stator (2), qui a plusieurs dispositifs (6) à bobine, dans lequel
- les dispositifs (6) à bobine sont disposés dans une direction périphérique, autour d'un axe (1) du palier radial,
- chacun des dispositifs (6) à bobine a un paquet (7) de tôles ayant des tôles individuelles, et
- chacun des dispositifs (6) à bobine a une bobine (11), qui est enroulée autour du paquet de tôles correspondant,
- dans lequel les tôles individuelles sont, pour chaque paquet (7) de tôles, empilées dans la direction périphérique,
- dans lequel chaque paquet (7) de tôles est en forme d'arceau dans la direction périphérique et a, dans la direction périphérique, un contour, qui a une distance constante à un arbre (4) donné à l'avance à supporter,
- dans lequel les dispositifs (6) à bobine ont, dans l'ensemble, à peu près chacun une forme en rein,
- dans lequel le palier radial magnétique a une enveloppe (17, 22) annulaire, dans laquelle les dispositifs (6) à bobine sont fixés,
- dans lequel l'enveloppe (17, 22) est en deux parties et les deux parties sont chacune annulaires et
- dans lequel une bague (20) d'appui distincte est mise sur la périphérie intérieure de l'enveloppe (17, 22) annulaire pour l'appui radial des dispositifs (6) à bobine.

2. Palier radial magnétique suivant la revendication 1, dans lequel le palier radial magnétique a quatre dispositifs (6) à bobine opposés paire par paire.

3. Palier radial magnétique suivant la revendication 1 ou 2, dans lequel chaque paquet (7) de tôles a, dans un plan de coupe s'étendant axialement, une section transversale en forme de U, qui possède deux branches (8, 9) et une âme (10) de liaison liant des branches, la bobine (11) respective étant enroulée autour d'une partie du paquet de tôles, dans une direction perpendiculaire à l'axe (1) du palier radial, laquelle partie est associée à l'âme (10) de liaison.

4. Palier radial magnétique suivant l'une des revendications précédentes, dans lequel les bobines (11) sont constituées chacune sous la forme d'une bobine à champ axial.

5. Palier radial magnétique suivant l'une des revendications précédentes, dans lequel chaque dispositif (6) à bobine a un support (16) de bobine, qui est disposé autour du paquet (7) de tôles respectif.

6. Palier radial magnétique suivant la revendication 5, dans lequel le support (16) de bobine est divisible.

7. Palier radial magnétique suivant la revendication 5, dans lequel le support (16) de bobine est injecté sur le paquet (7) de tôles respectif.
